# EUROPEAN PATENT APPLICATION

(11) **EP 4 699 990 A1**
(43) Date of publication of application: **25.02.2026**
(21) Application number: 24831024.5
(22) Date of filing: 28.06.2024
(51) Int. Cl.: C03B 7/01, C03B 17/06

(54) **HOPPER MECHANISM AND GLASS PRODUCT PRODUCTION DEVICE**

(30) Priority: 30.06.2023 CN 202310805298
(71) Applicant: Chongqing Aureavia Hi-Tech Glass Co., Ltd., Chongqing 400714 (CN)
(72) Inventor: GONG, Lihua, Chongqing 400714 (CN); ZHANG, Yanqi, Chongqing 400714 (CN); GONG, Jianguo, Chongqing 400714 (CN); SHI, Bingjie, Chongqing 400714 (CN); ZHOU, Shiqin, Chongqing 400714 (CN); LI, Limin, Chongqing 400714 (CN); YAO, Qingwei, Chongqing 400714 (CN)
(74) Representative: Locas, Davide
(86) International application number: PCT/CN2024/102538
(87) International publication number: WO 2025/002397

(57) **Abstract**

The present disclosure relates to the technical field of glass production. Disclosed are a hopper mechanism and a glass product production device. The hopper mechanism comprises a housing and a discharging hopper, the discharging hopper being arranged in the housing. The bottom of the housing is provided with a clearance opening. The discharging hopper is provided with a discharging nozzle, the discharging nozzle comprising a heat preservation section and an exposed section which are connected to each other, the heat preservation section being arranged in the clearance opening, the exposed section extending out of the clearance opening, and the height range of the exposed section being 20 mm to 50 mm. Compared with the prior art, the hopper mechanism provided by the present disclosure uses the heat preservation section arranged in the clearance opening and the exposed section extending out of the clearance opening, so that the hopper mechanism can effectively avoid the risk of sticking onto rollers during rolling processes and fold mark defects after rolling, thereby ensuring the forming quality of glass.

## Description

### CROSS-REFERENCE TO RELATED APPLICATIONS

The present disclosure claims the priority to the Chinese patent application with the filing No. 2023108052982 filed with the Chinese Patent Office on June 30, 2023, and entitled "HOPPER MECHANISM AND GLASS-ARTICLE PRODUCTION DEVICE", the contents of which are incorporated herein by reference in entirety.

### TECHNICAL FIELD

The present disclosure relates to the technical field of glass production, and specifically to a hopper mechanism and a glass-article production device.

### BACKGROUND ART

In production processes of glass articles, a general calendering method employs conventional lip bricks, edge retaining bricks and vertical calendering counter rolls in coordination. Such method is prone to problems such as material cooling at edges, crystallization, significant thickness variation of glass sheets, and difficulty in thinning. In order to solve the problems, a horizontal calendering counter-roll structure is provided, which structure is adapted to a feeding method of vertical downward flow of glass melt. During calendering process, the glass melt in a hopper falls down into a counter-roll gap, forming a material pool, and under extrusion and cooling effects of the counter rolls, a glass ribbon is formed. In this forming method, cooling and crystallization of the glass melt is temporally and spatially eliminated, and thus the problems of glass material cooling and crystallization at edges of the edge retaining bricks and the lip bricks can be effectively avoided.

However, the inventors have found after experiments that during calendering processes of the glass melt, a phenomenon of roll sticking frequently occurs, and upon completion of the calendaring, quality defects such as fold marks often appear on finished glass articles.

### SUMMARY

The present disclosure aims at providing a hopper mechanism and a glass-article production device, which can effectively avoid risks of roll sticking during calendering processes and fold mark defects on the glass articles upon completion of the calendaring, thereby ensuring forming quality of glass.

The present disclosure is implemented using technical solutions as follows.

Provided is a hopper mechanism, including a housing and a discharging hopper, where the discharging hopper is provided in the housing, the housing is provided with a relief opening (clearance opening) at bottom, the discharging hopper is provided with a discharging nozzle, and the discharging nozzle includes a thermally insulating section (heat preservation section) and a bare section (exposed section) connected to each other, where the thermally insulating section is provided in the relief opening, and the bare section extends out of the relief opening, with a height of the bare section ranging from 20 millimeters to 50 millimeters.

Optionally, the discharging nozzle is provided in a flat shape; a sum of heights of the thermally insulating section and the bare section ranges from twice to four times an orifice width of the discharging nozzle, and/or an orifice length of the discharging nozzle ranges from twice to four times the orifice width of the discharging nozzle.

Optionally, the orifice width of the discharging nozzle ranges from 12 millimeters to 20 millimeters; and the sum of the heights of the thermally insulating section and the bare section ranges from 24 millimeters to 80 millimeters, and/or the orifice length of the discharging nozzle ranges from 24 millimeters to 80 millimeters.

Optionally, edges and corners of the orifice of the discharging nozzle are radiused.

Optionally, a plurality of discharging nozzles are provided, and the plurality of discharging nozzles are provided side by side and spaced apart on the discharging hopper.

Optionally, a spacing between two adjacent discharging nozzles ranges from 45% to 55% of the orifice length of the discharging nozzles.

Optionally, the spacing between two adjacent discharging nozzles ranges from 12 millimeters to 40 millimeters.

Optionally, two adjacent discharging nozzles are provided with a reinforcing rib therebetween.

Optionally, the hopper mechanism further includes a thermally insulating brick, where the thermally insulating brick is provided in the housing, and the thermally insulating brick is provided with an avoidance slot, where the avoidance slot communicates with the relief opening, the thermally insulating section is provided in the avoidance slot, and the thermally insulating brick is configured to thermally insulate the thermally insulating section.

Optionally, the hopper mechanism further includes a thermally insulating layer provided between the housing and the discharging hopper.

Provided is a glass-article production device, including the above hopper mechanism, where the hopper mechanism includes the housing and the discharging hopper, where the discharging hopper is provided in the housing, the housing is provided with a relief opening at bottom, the discharging hopper is provided with a discharging nozzle, where the discharging nozzle includes a thermally insulating section and a bare section connected to each other, where the thermally insulating section is provided in the relief opening, and the bare section is provided to extend out of the relief opening, with a height of the bare section ranging from 20 millimeters to 50 millimeters.

The hopper mechanism and the glass-article production device provided by the present disclsoure have the following beneficial effects.

The hopper mechanism and an outlet of the bare section of the discharging nozzle in the glass-article production device in the present disclosure and a counter-roll gap have a relatively small drop therebetween, thereby enabling to effectively reduce a falling height of glass melt, shortening a contact duration of the glass melt with air, avoiding an interior-exterior temperature difference of the glass melt caused by accumulation of the glass melt falling into the counter-roll gap, maintaining a state of uniform relative temperature of a glass material pool prior to calendering, avoiding the fold mark defects caused after the calendering on the glass melt, and at the same, through proper design of the height of the bare section in the discharging nozzle, the present disclosure can effectively prevent occurrence of blockage of the glass melt, ensure the height of the material pool to be in a suitable state, mitigate the risks of roll sticking, and reduce the calendaring difficulty, thereby ensuring the forming quality of the glass articles.

### BRIEF DESCRIPTION OF DRAWINGS

In order to more clearly illustrate technical solutions of embodiments of the present disclosure, drawings which need to be used in the embodiments will be briefly introduced below. It should be understood that the drawings merely show some embodiments of the present disclosure, and thus should not be construed as limitation to the scope. Those ordinarily skilled in the art still could obtain other relevant drawings according to these drawings, without using any inventive efforts.
FIG. 1 is a structural schematic view of a glass-article production device provided by embodiments of the present disclosure;
FIG. 2 is a structural schematic view of a hopper mechanism provided by embodiments of the present disclosure;
FIG. 3 is a top view of a discharging hopper in the hopper mechanism provided by embodiments of the present disclosure;
FIG. 4 is a structural schematic view of the hopper mechanism provided by embodiments of the present disclosure during a discharging process;
FIG. 5 is a mathematical model diagram of a glass material pool formed in a counter-roll gap of calendering counter rolls during discharge of the hopper mechanism provided by embodiments of the present disclosure;
FIG. 6 is a top view of discharging hoppers in a hopper mechanism provided by embodiments of the present disclosure;
FIG. 7 is a structural schematic view of the hopper mechanism provided by embodiments of the present disclosure during a discharging process;
FIG. 8 is a mathematical model diagram of a glass material pool formed in a counter-roll gap of calendering counter rolls during discharge of the hopper mechanism provided by embodiments of the present disclosure;
FIG. 9 is a schematic view of a glass article with quality defects of fold marks in the prior art; and
FIG. 10 is a schematic view of a glass article produced in the present disclosure without quality defects of fold marks.

Reference signs: 10-glass-article production device; 100-hopper mechanism; 110-housing; 111-relief opening; 120-discharging hopper; 121-discharging nozzle; 122-thermally insulating section; 123-bare section; 124-reinforcing rib; 125-hopper body; 130-thermally insulating brick; 131-avoidance slot; 140- thermally insulating layer; 200-calendering counter roll; 210-counter-roll gap; 300-glass melt.

### DETAILED DESCRIPTION OF EMBODIMENTS

In order to make objectives, technical solutions and advantages of the embodiments of the present disclosure clearer, the technical solutions in the embodiments of the present disclosure will be clearly and completely described in conjunction with drawings in the embodiments of the present disclosure, and apparently, only some but not all embodiments are described. Generally, assemblies in the embodiments of the present disclosure described and shown in the drawings herein may be arranged and designed in a variety of different configurations.

Therefore, the detailed description below of the embodiments of the present disclosure provided in the drawings is not intended to limit the scope of protection of the present disclosure, but merely represents chosen embodiments of the present disclosure. Based on the embodiments in the present disclosure, all of other embodiments obtained by those ordinarily skilled in the art without using any inventive effectors shall fall within the scope of protection of the present disclosure.

It should be noted that like reference signs and letters represent like items in the following drawings, and thus, once a certain item is defined in one drawing, it is unnecessary to optionally define and explain the same in subsequent drawings.

In the description of the present disclosure, it should be noted that orientation or positional relationships indicated by the terms such as "inner", "outer", "upper", "lower" and "horizontal" are based on orientation or positional relationships as shown in the drawings, or orientation or positional relationships of the product disclosed when being conventionally placed in use, merely for facilitating describing the present disclosure and simplifying the description, rather than indicating or implying that related devices or elements have to be in the specific orientation or configured and operated in a specific orientation, and thus they should not be construed as limitation to the present disclosure. Besides, the terms such as "first", "second", and "third" are merely for distinguishing the description, but should not be construed as indicating or implying importance in the relativity.

In the description of the present disclosure, it should also be noted that, unless clearly defined and limited otherwise, the terms "provide", "link", "mount" and "connect" should be understood in a broad sense, for example, it may be a fixed connection, a detachable connection, or an integrated connection; it may be a mechanical connection or an electrical connection; it may be a direct connection, an indirect connection through an intermediary, or inner communication between two elements. Specific meanings of the above-mentioned terms in the present disclosure could be understood by those ordinarily skilled in the art according to specific situations.

Some embodiments of the present disclosure will be described in detail below in conjunction with the drawings. Features in the following embodiments can be combined with each other without conflict.

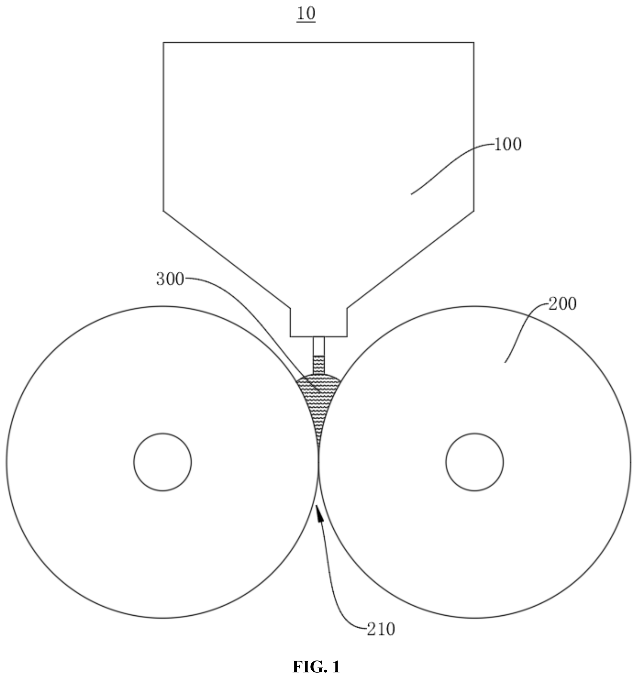

Referring to FIG. 1, embodiments of the present disclosure provide a glass-article production device 10, configured to produce glass articles. It can effectively avoid risks of roll sticking during calendering processes fold mark defects upon completion of the calendaring, thereby ensuring forming quality of the glass articles. It should be noted that the glass articles includes glass and microcrystalline glass (glass-ceramics).

The glass-article production device 10 includes a liquid supply runner (not shown), a hopper mechanism 100 and calendering counter rolls 200. Herein, the liquid supply runner is configured to feed a glass melt 300 into the hopper mechanism 100, the hopper mechanism 100 is configured to feed the glass melt 300 in a cascade-like manner into the calendering counter rolls 200, so as to form a material pool in a counter-roll gap 210 of the calendering counter rolls 200, and the calendering counter rolls 200 are configured to extrude and cool the glass melt 300, so as to form and obtain the glass articles.

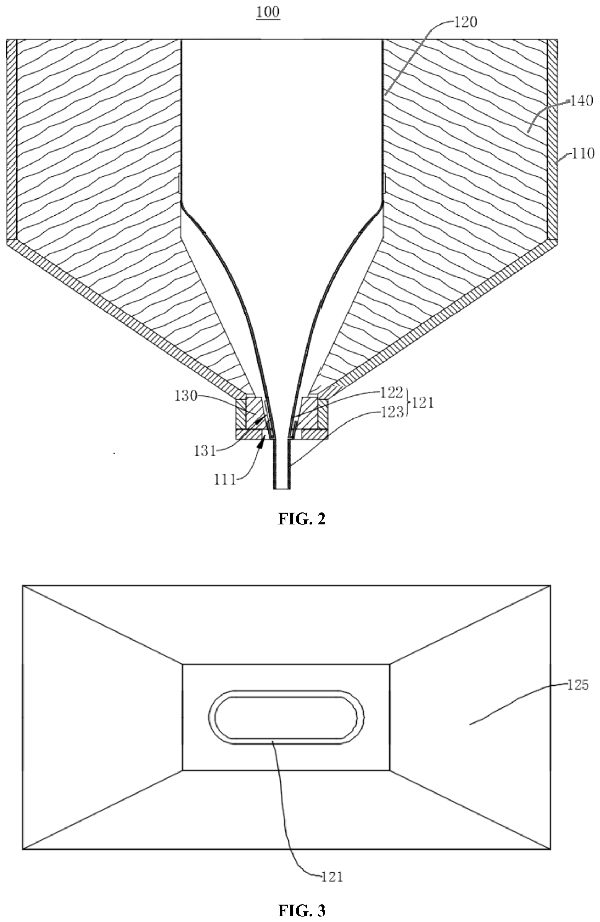

With reference to FIG. 2, the hopper mechanism 100 includes a housing 110 and a discharging hopper 120. Herein, the discharging hopper 120 is made of a platinum material, optionally a platinum-rhodium alloy, optionally 90% platinum and 10% rhodium (in mass ratio) in an embodiment, and an integral structure thereof is funnel-shaped. The discharging hopper 120 is provided in the housing 110, and the discharging hopper 120 is connected to the liquid supply runner, where the liquid supply runner is configured to feed the glass melt 300 into the discharging hopper 120. The discharging hopper 120 is provided with a discharging nozzle 121, where the discharging nozzle 121 is provided above the calendering counter rolls 200, a position of a nozzle mouth of the discharging nozzle 121 is corresponding to a position of the counter-roll gap 210, and the discharging nozzle 121 is configured to output the glass melt 300 into the counter-roll gap 210, so that the glass melt 300 forms the material pool in the counter-roll gap 210. The housing 110 is provided with a relief opening 111 at bottom, where the relief opening 111 is configured to accommodate the discharging nozzle 121, thus preventing interference with the discharge of the glass melt 300.

Referring to FIG. 3 at the same time, specifically, the discharging hopper 120 includes a hopper body 125 and the discharging nozzle 121, where the discharging nozzle 121 is provided at an end of the hopper body 125 close to the calendering counter rolls 200. A length of the discharging nozzle 121 in a vertical direction ranges from 24 millimeters to 80 millimeters, that is, 24 millimeters to 80 millimeters upwards from the bottom of the discharging hopper 120 is the discharging nozzle 121, and the rest is the hopper body 125. In an embodiment, the hopper body 125 and the discharging nozzle 121 can be connected by welding, optionally integrally molded, so as to ensure connection airtightness between the hopper body 125 and the discharging nozzle 121. The housing 110 is a steel structure. The housing 110 may be in a cylindrical shape or a cuboidal shape, optionally in a funnel shape, similar to that of the discharging hopper 120. A cross-sectional area of the housing 110 gradually decreases from top to bottom. The housing 110 is provided therein with an accommodation space for mounting the discharging hopper 120, and the hopper body 125 is provided inside the accommodation space of the housing 110 so as to be enclosed by the housing 110. The discharging nozzle 121 extends out of the relief opening 111.

It is worth noting that the discharging nozzle 121 is singular in quantity, and the discharging nozzle 121 includes a thermally insulating section 122 and a bare section 123 that are connected to each other. Herein, the thermally insulating section 122 communicates with the hopper body 125, the bare section 123 is provided on a side of the thermally insulating section 122 away from the hopper body 125, and the glass melt 300 in the hopper body 125 can sequentially flow through the thermally insulating section 122 and the bare section 123 into the counter-roll gap 210 under the effect of gravity. Specifically, the thermally insulating section 122 is provided in the relief opening 111, that is, the thermally insulating section 122 is located within a coverage area of the housing 110. The bare section 123 is provided to extend out of the relief opening 111, that is, the bare section 123 is not located within the coverage area of the housing 110.

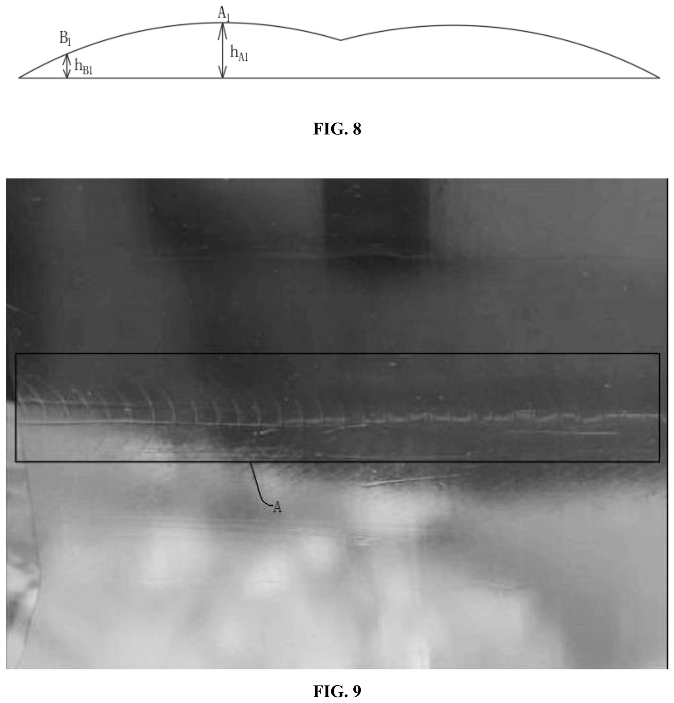

The disclosers researched and found that the cause for the quality defects such as fold marks frequently appearing on finished glass articles upon completion of the calendaring in the forming method with the horizontal calendering counter rolls is that a contact duration of the glass melt 300 flowing out from a discharge port into the counter-roll gap 210 with air is prolonged, which results in formation of a temperature difference between a surface temperature of the glass melt 300 and an interior, and leads to uneven temperature of the glass melt 300, thus forming the glass material pool alternately doped with excessive temperature difference in the counter-roll gap 210, and the uneven temperature will cause uneven viscosity, where the glass melt 300 with higher viscosity requires a larger acting force during rolling, and after the rolling, fold marks are ultimately formed on the glass articles, inducing the quality defects. In this regard, the present disclosure performs a special design for the discharging nozzle 121 so as to solve the problem of fold mark defects. It should be noted that, when the device of the present disclosure discharges, both the hopper body 125 and the discharging nozzle 121 can be electrically heated, and when the hopper body 125 and the discharging nozzle 121 are electrically heated, the housing 110 can gather heat, and prevent direct thermal exchange of the heat with air, thus playing a certain thermal insulating role. The discharging nozzle 121 is divided into two parts (the thermally insulating section 122 and the bare section 123) communicating in sequence. On one hand, the thermally insulating section 122 provided in the housing 110, in coordination with the housing 110, can thermally insulate the glass melt 300 in the thermally insulating section 122, ensure temperature stability of the glass melt 300 when flowing into the bare section 123, and avoid excessive heat dissipation to cause temperature difference. On the other hand, by extending the bare section 123 into the counter-roll gap 210, the absence of coverage of the housing 110 allows a relatively small bulk of a position where the bare section 123 is located, and enables deeper extension into the counter-roll gap 210 without compromising normal operation of the calendering counter rolls 200. Compared with a technical solution in the prior art, i.e., a thermal insulation material in a "hollow square" shape provided at the discharge port of the hopper causes increased bulk at the discharge port, thereby preventing deeper extension of the discharge port into the counter-roll gap, a drop between an outlet of the bare section 123 and the counter-roll gap 210 in the present disclosure is relatively small, a falling height of the glass melt 300 flowing out from the bare section 123 to the counter-roll gap 210 is relatively small, thus being capable of effectively reducing the falling height of the glass melt 300, shortening the contact duration of the glass melt 300 with air, preventing generation of the temperature difference between the interior and exterior of the glass melt 300, maintaining a state of uniform relative temperature of the glass material pool prior to the calendering, avoiding the defects of fold marks caused after the calendering on the glass melt (as shown in A part in FIG. 9), and ensuring the forming quality of the glass. In addition, the phenomenon of roll sticking will also occur during the calendering process of the glass melt 300, because improper dimensional configuration of the discharging nozzle 121 will lead to excessive accumulation of the glass melt 300 in the counter-roll gap 210 during the calendering process, and increased material pool height formed thereby elevates the risks of roll sticking. In view of this, the present disclosure divides the discharging nozzle 121 into the thermally insulating section 122 and the bare section 123, and properly designs the height of bare section 123, so as to maintain the height of the glass material pool to be in a proper state, avoid the risks of roll sticking, and be capable of effectively preventing the occurrence of blockage of the glass melt 300.

In an embodiment, as the bare section 123 is not provided with a thermal insulation measure outside, heat loss inevitably occurs to the glass melt 300 when flowing in the bare section 123, leading to a decreased temperature of the glass melt 300. In view of this, the height of the bare section 123 is configured to range from 20 millimeters to 50 millimeters and within all ranges and sub-ranges therebetween, for example, 25-50 millimeters, 30-50 millimeters, 35-50 millimeters, 40-50 millimeters, 45-50 millimeters, 20-45 millimeters, 20-40 millimeters, 20-35 millimeters, 20-30 millimeters, and 20-25 millimeters. A proper height of the bare section 123 can minimize the falling height of the glass melt 300 flowing out from the bare section 123 to the counter-roll gap 210 while ensuring an overall temperature drop of the glass melt 300 to be within an acceptable range (without compromising normal calendering forming of the glass), so as to minimize the contact duration of the glass melt 300 with air, and avoid an excessive interior-exterior temperature difference of the glass melt 300.

In an embodiment, with continued reference to FIG. 2, in order to optionally thermally insulate the hopper body 120, the hopper mechanism 100 further includes a thermally insulating brick 130 and a thermally insulating layer 140. The thermally insulating layer 140 is provided between the housing 110 and the discharging hopper 120, and the thermally insulating layer 140 is configured to achieve functions of thermal insulation and electrical insulation, thus reducing heat dissipation of the glass melt 300 in the discharging hopper 120, and preventing occurrence of scalding or electrocution of workers. Optionally, the thermally insulating brick 130 is provided in the housing 110 and located at the bottom of the housing 110, with a height thereof matching that of the thermally insulating section 122, so as to enclose the thermally insulating section 122. Specifically, the thermally insulating brick 130 is provided with an avoidance slot 131, the thermally insulating section 122 is provided in the avoidance slot 131, the avoidance slot 131 communicates with the relief opening 111, and the discharging nozzle 121 is provided to sequentially pass through the avoidance slot 131 and the relief opening 111. Herein, the thermally insulating section 122 is provided in the avoidance slot 131, and the thermally insulating brick 130 is configured to thermally insulate the thermally insulating section 122, thereby enhancing a thermal insulation effect of the thermally insulating section 122 for the glass melt 300. The bare section 123 is provided outside the avoidance slot 131, and the bare section 123 is not provided with the thermally insulating brick 130 outside, thus reducing the bulk of the position where the bare section 123 is located, and facilitating deeper extension of the bare section 123 into the counter-roll gap 210, without compromising the normal operation of the calendering counter rolls 200.

Optionally, the disclosers further found that, an improper shape configuration of the discharging nozzle 121 in the prior art will also lead to excessive accumulation of the glass melt 300 in the counter-roll gap 210 during the calendering process, and increased material pool height formed thereby induces the occurrence of the phenomenon of roll sticking of the glass melt 300 during the calendering process. In this regard, the present disclosure properly designs the profile (length, width, height and proportions thereof) of the discharging nozzle 121, so as to effectively prevent the occurrence of blockage of the glass melt 300, maintain a proper state of the height of the material pool, mitigate the risks of roll sticking, and reduce the calendering difficulty.

In an embodiment, the thermally insulating section 122 of the discharging nozzle 121 is substantially frustum-shaped, and the bare section 123 is substantially in a cuboidal shape. An orifice of the discharging nozzle 121 (i.e., an orifice of the bare section 123) is in a rectangular shape, with an elongated long side and a shortened short side, where a length of the long side is an orifice length of the discharging nozzle 121, and a length of the short side is an orifice width of the discharging nozzle 121. The discharging nozzle 121 is configured to allow the glass melt 300 to flow downwards in the vertical direction, and a length of the discharging nozzle 121 in the vertical direction is the height of the discharging nozzle 121, i.e., a sum of heights of the thermally insulating section 122 and the bare section 123.

Optionally, the sum of the heights of the thermally insulating section 122 and the bare section 123 ranges from twice to four times the orifice width of the discharging nozzle 121 and is within all ranges and sub-ranges therebetween, for example, 2-2.5 times, 2.5-3 times, 2-3.5 times, 3-3.5 times, 3-4 times, and 3.5-4 times. Specifically, the sum of the heights of the thermally insulating section 122 and the bare section 123 ranges from 24 millimeters to 80 millimeters, that is, the total height of the discharging nozzle 121 ranges from 24 millimeters to 80 millimeters and is within all ranges and sub-ranges therebetween, for example, 30-80 millimeters, 40-80 millimeters, 50-80 millimeters, 60-80 millimeters, 70-80 millimeters, 24-70 millimeters, 30-70 millimeters, 40-70 millimeters, 50-70 millimeters, 60-70 millimeters, 30-50 millimeters, 30-70 millimeters, and 40-65 millimeters.

In an embodiment, the total height of the discharging nozzle 121 ranges from 24 millimeters to 80 millimeters, and the total height of the discharging nozzle 121 approximately ranges from twice to four times the orifice width. The total height of the discharging nozzle 121 within this range can allow deeper extension into the counter-roll gap 210 as much as possible while preventing blockage of the glass melt 300. If the total height of the discharging nozzle 121 is less than twice the orifice width, the discharging nozzle 121 has a too small total height, and fails to extend deeper into the counter-roll gap 210. If the total height of the discharging nozzle 121 is greater than four times the orifice width, the discharging nozzle 121 has a too large total height, and the glass melt 300 is prone to blockage when flowing through the bare section 123 of the discharging nozzle 121 (the bare section 123 is not thermally insulated, and when it is too high, the temperature of the glass melt 300 will drop excessively, even leading to devitrification to induce blockage).

In an embodiment, the orifice length of the discharging nozzle 121 ranges from twice to four times the orifice width of the discharging nozzle 121 and is within all ranges and sub-ranges therebetween, for example, 2-2.5 times, 2.5-3 times, 2-3.5 times, 3-3.5 times, 3-4 times, and 3.5-4 times. Specifically, while the total height of the discharging nozzle 121 ranges from 24 millimeters to 80 millimeters, the orifice length of the discharging nozzle 121 ranges from 24 millimeters to 80 millimeters and is within all ranges and sub-ranges therebetween, for example, 30-80 millimeters, 40-80 millimeters, 50-80 millimeters, 60-80 millimeters, 70-80 millimeters, 24-70 millimeters, 30-70 millimeters, 40-70 millimeters, 50-70 millimeters, 60-70 millimeters, 30-50 millimeters, 30-70 millimeters, and 40-65 millimeters.

In an embodiment, the orifice length of the discharging nozzle 121 ranges from 24 millimeters to 80 millimeters, and the orifice length of the discharging nozzle 121 approximately ranges from twice to four times the orifice width. The orifice length within this range can ensure a relatively uniform flow rate of the glass melt 300 supplied along an orifice length direction. If the orifice length is less than twice the orifice width, the supplied glass melt 300 will be overly concentrated, leading to an increased height of the material pool that falls in the counter-roll gap 210, and elevating the risks of roll sticking. If the orifice length is greater than four times the orifice width, a phenomenon that a flow velocity of the glass melt 300 in a center is high (the temperature is high) and a flow velocity of the glass melt 300 at two sides is low (the temperature is slightly low, and even devitrification appears) will occur in the orifice length direction, thus compromising the forming quality of the glass.

In an embodiment, while the sum of the heights of the thermally insulating section 122 and the bare section 123 ranges from twice to four times the orifice width of the discharging nozzle 121, the orifice length of the discharging nozzle 121 ranges from twice to four times the orifice width of the discharging nozzle 121. Specifically, the orifice width of the discharging nozzle 121 ranges from 12 millimeters to 20 millimeters and is within all ranges and sub-ranges therebetween, for example, 12-16 millimeters, 12-17 millimeters, 12-18 millimeters, 12-19 millimeters, 13-16 millimeters, 13-17 millimeters, 13-18 millimeters,13-19 millimeters, 14-15 millimeters, 14-16 millimeters, 14-17 millimeters, 14-18 millimeters, 14-19 millimeters, 15-16 millimeters, 15-17 millimeters, 15-18 millimeters, 15-19 millimeters, 16-17 millimeters, 16-18 millimeters, 16-19 millimeters, 17-18 millimeters, 17-19 millimeters, and 18-19 millimeters.

In an embodiment, the orifice width of the discharging nozzle 121 ranges from 12 millimeters to 20 millimeters. A proper orifice width can ensure smooth outflow of the glass melt 300, and prevent blockage of the glass melt 300. The orifice width should not be excessively small, and if the orifice width is less than 12 millimeters, the glass melt 300 will be prone to blockage at the orifice and cannot flow out smoothly. The orifice width should not excessively large, either, and if the orifice width is greater than 20 millimeters, a flow rate of the glass melt 300 will be too large, and the glass melt 300 cannot be retained in the discharging hopper 120, thus failing to realize uniform feeding.

In an embodiment, edges and corners of the orifice of the discharging nozzle 121 are radiused, so as to reduce frictional resistance of flow of the glass melt 300 in the discharging nozzle 121, and enhance smoothness and stability of the flow of the glass melt 300.

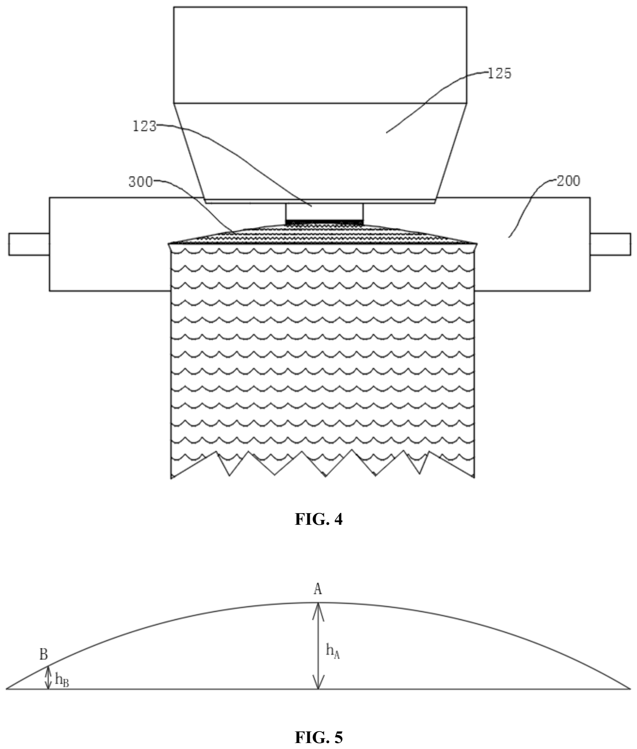

Referring to FIG. 4 (the calendering counter rolls 200 located at a front side in FIG. 4 are rendered in a perspective manner), it is worth noting that during the feeding of the glass melt 300 to the counter-roll gap 210 by the hopper mechanism 100, due to the configuration of the bare section 123, the discharging nozzle 121 can extend deeper into the counter-roll gap 210 without compromising the normal operation of the calendering counter rolls 200, in which case, the falling height of the cascade-like glass melt 300 flowing out from the bare section 123 to the counter-roll gap 210 is relatively small, ranging from 10 millimeters to 20 millimeters, thus enabling a small interior-exterior temperature difference of the glass melt 300, thereby allowing a uniform temperature of the supplied glass melt 300, and ensuring the forming quality of the glass. Optionally, the orifice of the discharging nozzle 121 is sized to be short and wide (the discharging nozzle 121 has a reduced orifice length and an increased orifice width), thus enabling comparable temperatures and comparable flow velocities of the glass melt 300 in an inner edge part and a central part of the orifice, achieving a relatively uniform flow rate in the orifice length direction, rendering a thick and narrow outflow cascade-like glass melt 300, with a reduced surface area and minimized heat dissipation during a falling process, and effectively preventing too rapid temperature drop of the glass melt 300. In addition, in the orifice length direction of the discharging nozzle 121, the hopper mechanism 100 can be mounted on a slide rail and cooperate with an electric motor, so as to move left and right, with a single-side travel distance less than or equal to 20 millimeters. In this way, when feeding of the hopper mechanism 100 deviates between the left and the right, adjustment can be performed by moving the hopper mechanism 100.

Compared with the prior art, the hopper mechanism 100 provided by the present disclosure, by employing the thermally insulating section 122 provided in the relief opening 111 and the bare section 123 extending out of the relief opening 111 while properly designing the length, width, and height of the discharging nozzle 121 and the proportions thereof, can effectively prevent the occurrence of blockage of the glass melt 300, ensure the height of the material pool to be in a suitable state, mitigate the risks of roll sticking and calendering difficulty, and is capable of effectively decreasing the falling height of the glass melt 300, shortening the contact duration of the glass melt 300 with air, maintaining the glass material pool to be in a state of uniform relative temperature prior to the calendering, avoiding the defects of fold marks caused after the calendering on the glass melt 300, and ensuring the forming quality of the glass. The glass-article production device 10 achieves good product quality and high yield.

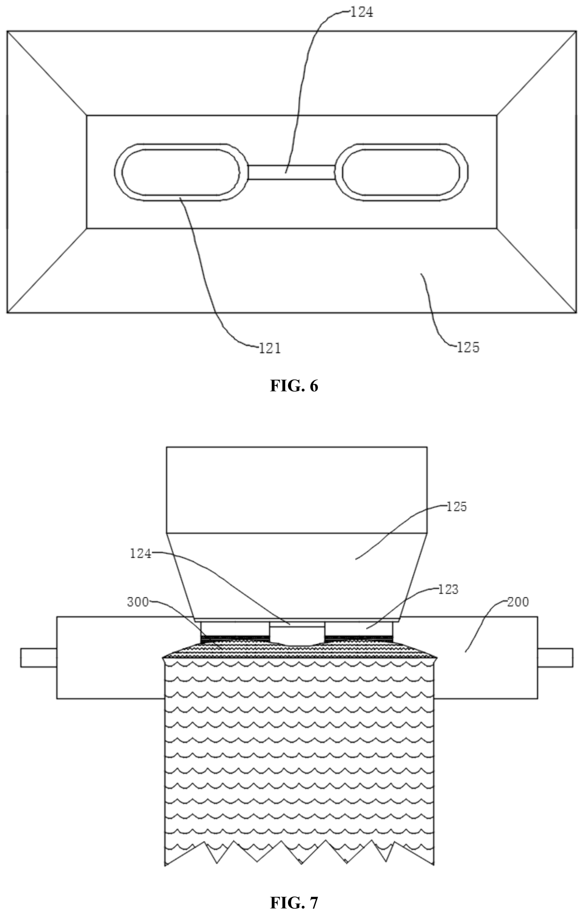

Optionally, with reference to FIG. 6 to FIG. 8 in combination (in FIG. 7, the calendering counter rolls 200 located at a front side in FIG. 7 are rendered in a perspective manner), an embodiment of the present disclosure provides a hopper mechanism 100. Compared with the above embodiments, the present embodiment differs in that a plurality of discharging nozzles 121 are provided.

It should be noted that the plurality of discharging nozzles 121 are provided side by side and spaced apart on the discharging hopper 120. The plurality of discharging nozzles 121 are provided in the orifice length direction of the discharging nozzles 121 at interval, and the plurality of discharging nozzles 121 operate together, so as to achieve a function of discharging the glass melt 300 at the same time. Feeding by the plurality of discharging nozzles 121 can reduce the height of the material pool in the counter-roll gap 210, significantly mitigate the risks of roll sticking, minimize a lateral temperature difference across a glass ribbon formed after rolling, and further decrease a lateral thickness difference. In the present embodiment, the number of the discharging nozzles 121 is two, but is not limited thereto. In other embodiments, the number of the discharging nozzles 121 may be three or four, and the number of the discharging nozzles 121 is not specifically limited.

In an embodiment, the discharging hopper 120 is made of a platinum material, and reinforcing ribs 124 are provided between the discharging nozzles 121, so as to enhance strength of the discharging nozzles 121, resist high-temperature creep of platinum, and prevent deformation of the discharging nozzles 121 under high temperatures. In addition, the discharging nozzles 121 can be made of a platinum-rhodium alloy material, so as to improve capability of the discharging nozzles 121 of resisting high-temperature deformation.

In an embodiment, a spacing between two adjacent discharging nozzles 121 ranges from 45% to 55% of the orifice length of the discharging nozzles 121 and is within all ranges and sub-ranges therebetween, for example, 45%-52%, 45%-50%, 45%-48%, 48%-55%, 50%-55%, and 52%-55%, specifically optionally 50%, so as to ensure that the glass melt 300 falling into the counter-roll gap 210 is capable of forming a continuous material pool. In the present embodiment, the spacing between two adjacent discharging nozzles 121 ranges from 12 millimeters to 40 millimeters. The spacing between two adjacent discharging nozzles 121 should not be excessively small, and if the spacing between two adjacent discharging nozzles 121 is too small, corresponding material pool at the spacing will be too high, increasing the risks of roll sticking. The spacing between two adjacent discharging nozzles 121 should not be excessively large, and if the spacing between two adjacent discharging nozzles 121 is too large, the glass melt 300 falling in the counter-roll gap 210 fails to form a continuous material pool, thereby compromising the forming quality of the glass.

With reference to FIG. 5 and FIG. 8 together, discharge of one discharging nozzle 121 and discharge of two discharging nozzles 121 are compared and analyzed.

When one discharging nozzle 121 performs discharge: the contact duration of the calendering counter rolls 200 with the glass melt 300 is tA=hA/V, where hA is a maximum height of the material pool, and V is a rotational velocity of the calendering counter rolls 200. When two discharging nozzles 121 perform discharge: the contact duration of the calendering counter rolls 200 with the glass melt 300 is tA1=hA1/V, where hA1 is a maximum height of the material pool, and V is a rotational velocity of the calendering counter rolls 200. Since the material pool formed when discharging with one discharging nozzle 121 is higher than that formed when discharging with two discharging nozzles 121, i.e., hA is greater than hA1, it can be seen therefrom that the contact duration of the glass melt 300 with the calendering counter rolls 200 when discharging with one discharging nozzle 121 is longer, and the longer the contact duration, the higher the temperature of roll surfaces, and the greater the risks of roll sticking; therefore, feeding with a plurality of discharging nozzles 121 can lower the height of the material pool in the counter-roll gap 210, and significantly mitigate the risks of roll sticking.

Optionally, the longer the contact duration of the glass melt 300 with the calendering counter rolls 200, the lower the temperature of corresponding glass ribbon after rolling. The contact duration of point A with the glass melt 300 is longer than that of point A1 with the glass melt 300, and thus a glass ribbon temperature TA after rolling is less than TA1, that is, TA<TA1. By the same logic, as point B and point B1 are located at comparable material pool heights, contact durations of the glass melt 300 at points B and B1 with the calendering counter rolls 200 are close, and the glass ribbon temperatures after rolling are nearly equal, that is, TB=TB1. In this way, lateral temperature differences ΔT=TB-TA and ΔT1=TB1-TA1 can be calculated for the glass ribbons, and as TA<TA1 and TB=TB1, ΔT1<ΔT, and the smaller the material pool height, the smaller the lateral temperature difference across the glass ribbon.

Therefore, based on the above analysis, feeding with a plurality of discharging nozzles 121 can reduce the height of the material pool in the counter-roll gap 210, shorten the contact duration of the glass melt 300 with the calendering counter rolls 200, greatly mitigate the risks of roll sticking, and can also significantly decrease the lateral temperature difference across the glass ribbon.

In addition, in order to embody beneficial effects of the present disclosure, the inventors have conducted multiple comparative experiments, and experimental results are listed in the following table.

| Serial No. | Quantity of Orifice Channels | Orifice Width mm | Orifice Length mm | Orifice Channel Height mm | Orifice Spacing mm | Cascade Molten glass Drop | Thinning Difficulty Level | Surface Fold Mark | Molten glass Blockage | Material pool Height | Roll Sticking Risk | Note |
|---|---|---|---|---|---|---|---|---|---|---|---|---|
| 1 | 2 | 12 | 40 | 40 | 20 | 1-3 cm | Easy | None | Not prone to blockage | Suitable | Relatively low | Adaptability to a high drawing amount, production of medium-width plates (300-500 mm); small temperature difference between the interior and the exterior of the cascade molten glass, high molten glass temperature, and easy thinning; and small oscillation when deposited on the material pool, and no fish-scale-like fold marks after rolling |
| 2 | 2 | 12 | 40 | 40 | 20 | 3-10 cm | Relatively easy | Slight fish-scale-like | Not prone to blockage | Suitable | Relatively low | Relatively small temperature difference between the interior and the exterior of the cascade molten glass, relatively small molten glass temperature drop, and relatively easy thinning; relatively small oscillation when deposited on the material pool, and slight fish-scale-like fold marks after rolling |
| 3 | 2 | 12 | 40 | 40 | 20 | >10cm | Hard | Obvious fish-scale-like | Not prone to blockage | Suitable | Relatively low | Large temperature difference between the interior and the exterior of the cascade molten glass, significant molten glass temperature drop, and hard thinning; great oscillation when deposited on the material pool, and obvious fish-scale-like fold marks after rolling |
| 4 | 2 | 10 | 40 | 40 | 20 | 1-3 cm | Easy | None | Prone to blockage | Suitable | Relatively low | Too small orifice width, blockage susceptibility, and overflow of the platinum hopper over time |
| 5 | 2 | 12 | 40 | 40 | 50 | 1-3 cm | Easy | None | Not prone to blockage | Suitable | Relatively low | Too large orifice spacing, no converge of the molten glass between the rolls, and susceptibility to formation of two glass ribbons |
| 6 | 2 | 12 | 40 | 40 | 5 | 1-3 cm | Easy | None | Not prone to blockage | Suitable | Relatively high | Too small orifice spacing, concentrated material pool, and roll sticking tendency |
| 7 | 2 | 25 | 40 | 40 | 20 | 1-3 cm | Easy | None | Not prone to blockage | Relatively high | Relatively high | Too large orifice width, no molten glass remaining in the platinum hopper; and concentrated material pool, and roll sticking tendency |
| 8 | 2 | 14 | 20 | 40 | 10 | 1-3 cm | Easy | None | Not prone to blockage | Relatively high | Relatively high | Too small orifice length, concentrated material pool, and roll sticking tendency |
| 9 | 2 | 12 | 100 | 40 | 50 | 1-3 cm | Easy | None | Not prone to blockage | Suitable | Relatively low | Too large orifice length, non-uniform lateral feeding, no converge of the molten glass between the rolls, and susceptibility to formation of two glass ribbons |
| 10 | 2 | 12 | 40 | 20 | 20 | 1-3 cm | Easy | None | Not prone to blockage | Suitable | Relatively high | Incapability of deeper extension into the counter-roll gap |
| 11 | 2 | 12 | 40 | 80 | 20 | 1-3 cm | Easy | None | Prone to blockage | Suitable | Relatively low | Too large orifice channel height, susceptibility to blockage, and overflow of the platinum hopper over time |
| 12 | 2 | 14 | 50 | 40 | 25 | 1-3 cm | Easy | None | Not prone to blockage | Suitable | Relatively low | Adaptability to large drawing amount, production of medium-width plates (400-500 mm); small temperature difference between the interior and the exterior of the cascade molten glass, high molten glass temperature, easy thinning; and small oscillation when deposited on the material pool, and no fish-scale-like fold marks after rolling |
| 13 | 2 | 14 | 50 | 40 | 25 | 3-10 cm | Relatively easy | Slight fish-scale-like | Not prone to blockage | Suitable | Relatively low | Relatively small temperature difference between the interior and the exterior of the cascade molten glass, relatively small molten glass temperature drop, and relatively easy thinning; and relatively small oscillation when deposited on the material pool, and slight fish-scale-like fold marks after rolling |
| 14 | 2 | 12 | 40 | 100 | 20 | 1-3 cm | Hard | Obvious fish-scale-like | Not prone to blockage | Suitable | Relatively low | Large temperature difference between the interior and the exterior of the cascade molten glass, significant molten glass temperature drop, and hard thinning; and great oscillation when deposited on the material pool, and obvious fish-scale-like fold marks after rolling |
| 15 | 3 | 14 | 50 | 40 | 25 | 1-3 cm | Easy | None | Not prone to blockage | Suitable | Relatively low | Adaptability to large drawing amount, production of wide-width plates (500 mm or more); small temperature difference between the interior and the exterior of the cascade molten glass, high molten glass temperature, easy thinning; and small oscillation when deposited on the material pool, and no fish-scale-like fold marks after rolling |
| 16 | 3 | 14 | 50 | 40 | 25 | 3-10 cm | Relatively easy | Slight fish-scale-like | Not prone to blockage | Suitable | Relatively low | Relatively small temperature difference between the interior and the exterior of the cascade molten glass, relatively small molten glass temperature drop, and relatively easy thinning; relatively small oscillation when deposited on the material pool, and slight fish-scale-like fold marks after rolling |
| 17 | 3 | 14 | 50 | 40 | 25 | >10cm | Hard | Obvious fish-scale-like | Not prone to blockage | Suitable | Relatively low | Large temperature difference between the interior and the exterior of the cascade molten glass, significant molten glass temperature drop, and hard thinning; and great oscillation when deposited on the material pool, and obvious fish-scale-like fold marks after rolling |
| 18 | 1 | 12 | 40 | 40 | - | 1-3 cm | Easy | None | Not prone to blockage | Suitable | Relatively low | Adaptability to relatively low drawing amount, production of narrow plates (300 mm or below); small temperature difference between the interior and the exterior of the cascade molten glass, high molten glass temperature, and easy thinning; and small oscillation when deposited on the material pool, and no fish-scale-like fold marks after rolling |
| 19 | 1 | 12 | 40 | 40 | - | 3-10 cm | Relatively easy | Slight fish-scale-like | Not prone to blockage | Suitable | Relatively low | Relatively small temperature difference between the interior and the exterior of the cascade molten glass, relatively small molten glass temperature drop, and relatively easy thinning; and relatively small oscillation when deposited on the material pool, and slight fish-scale-like fold marks after rolling |
| 20 | 1 | 12 | 40 | 40 | - | >10 cm | Hard | Obvious fish-scale-like | Not prone to blockage | Suitable | Relatively low | Large temperature difference between the interior and the exterior of the cascade molten glass, significant molten glass temperature drop, and hard thinning; and great oscillation when deposited on the material pool, and obvious fish-scale-like fold marks after rolling |
| 21 | 1 | 10 | 40 | 40 | - | 1-3 cm | Easy | None | Prone to blockage | Suitable | Relatively low | Too small orifice width, blockage susceptibility, and overflow of the platinum hopper over time |
| 22 | 1 | 14 | 50 | 40 | - | 1-3 cm | Easy | None | Not prone to blockage | Suitable | Relatively low | Adaptability to relatively low drawing amount, production of narrow plates (300 mm or below) |

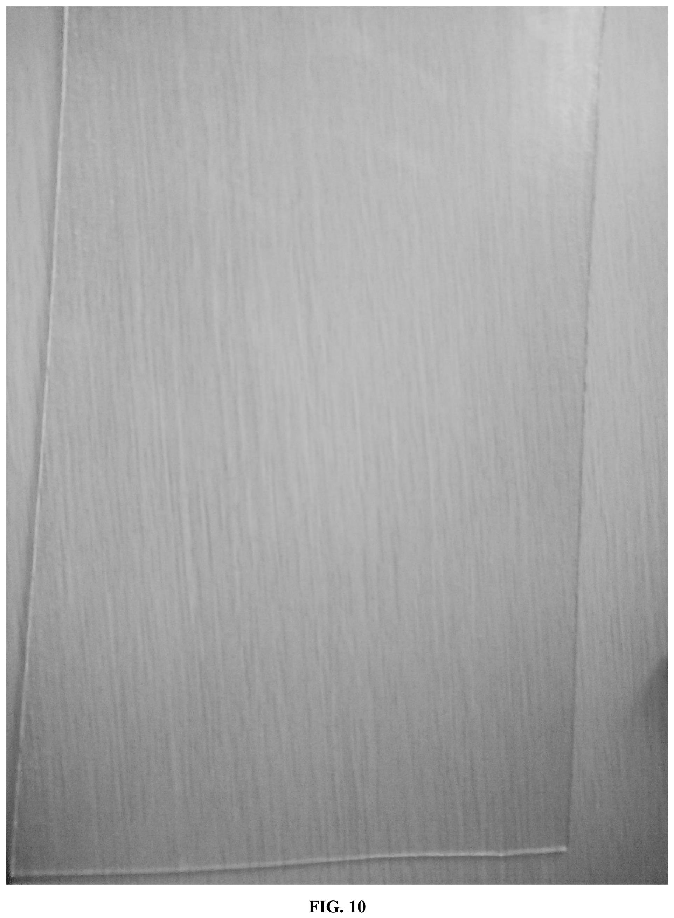

It can be seen from the above table that when the number of the discharging nozzles 121 is two, the orifice width of the discharging nozzles 121 ranges from 12 millimeters to 20 millimeters, the orifice length of the discharging nozzles 121 ranges from 24 millimeters to 80 millimeters, the height of the bare section 123 ranges from 20 millimeters to 50 millimeters, the orifice channel height (the sum of the heights of the thermally insulating section 122 and the bare section 123) ranges from twice to four times the orifice width of the discharging nozzles 121, the orifice length of the discharging nozzles 121 ranges from twice to four times the orifice width of the discharging nozzles 121, and the spacing between two adjacent discharging nozzles 121 ranges from 45% to 55% of the orifice length of the discharging nozzles 121, thereby being capable of effectively avoiding the occurrence of the blockage of the glass melt 300, ensuring the height of the material pool to be in a suitable state, mitigating the risks of roll sticking and calendering difficulty, effectively decreasing the falling height of the glass melt 300, shortening the contact duration of the glass melt 300 with air, avoiding the generation of the interior-exterior temperature difference of the glass melt 300, and ensuring the forming quality of the glass, without fish-scale-like fold mark quality defects (with reference to FIG. 9 and FIG. 10 for comparison).

Specifically, it can be seen from comparison between experimental examples of Serial No. 1 and Serial No. 10 that if the orifice channel height ranges from twice to four times the orifice width of the discharging nozzle 121, the risks of roll sticking are relatively low; and if the orifice channel height is less than twice the orifice width of the discharging nozzle 121, the phenomenon of roll sticking is prone to occur. It can be seen from comparison between experimental examples of Serial No. 1 and Serial No. 11 that if the orifice channel height ranges from twice to four times the orifice width of the discharging nozzle 121, the glass melt 300 is unlikely to condense and block; and if the orifice channel height is greater than four times the orifice width of the discharging nozzle 121, the glass melt 300 tends to condense and block, compromising the normal production. It can be seen from comparison between experimental examples of Serial No. 1 and Serial No. 7 that if the orifice length of the discharging nozzle 121 ranges from twice to four times the orifice width of the discharging nozzle 121, the risks of roll sticking are relatively low; and if the orifice length of the discharging nozzle 121 is less than twice the orifice width of the discharging nozzle 121, the phenomenon of roll sticking tends to occur.

It can be seen from comparison between experimental examples of Serial No. 1, Serial No. 4 and Serial No. 7 that if the orifice width of the discharging nozzle 121 ranges from 12 millimeters to 20 millimeters, the glass melt 300 is unlikely to condense and block; if the orifice width of the discharging nozzle 121 is less than 12 millimeters, the glass melt 300 is likely to condense and block; if the orifice width of the discharging nozzle 121 is greater than 20 millimeters, the phenomenon of material pool concentration and the phenomenon of roll sticking tend to occur. It can be seen from comparison between experimental examples of Serial No. 1, Serial No. 10 and Serial No. 14 that if the orifice channel height ranges from 24 millimeters to 80 millimeters, an insertion depth of the discharging nozzle 121 is suitable for feeding; if the orifice channel height is less than 24 millimeters, the discharging nozzle 121 fails to be inserted deeper into the counter-roll gap 210; if the orifice channel height is greater than 80 millimeters, the cascade glass melt has a significant temperature difference between the interior and the exterior, and the glass after rolling has obvious fish-scale-like fold mark defects, thus compromising the product quality.

When the number of the discharging nozzles 121 is two or three, it can be seen from comparison between experimental examples of Serial No. 1, Serial No. 5 and Serial No. 6 that if the orifice spacing ranges from 45% to 55% of the orifice length, or the orifice spacing ranges from 12 millimeters to 40 millimeters, the risks of roll sticking are reduced; if the orifice spacing is less than 45% of the orifice length of the discharging nozzles 121, or the orifice spacing is less than 12 millimeters, the phenomenon of roll sticking tends to occur, thus compromising the normal production; if the orifice spacing is greater than 55% of the orifice length of the discharging nozzles 121, or the orifice spacing is greater than 40 millimeters, two or three glass ribbons will be formed on the product, thereby compromising the product quality.

The hopper mechanism 100 provided by the embodiments of the present disclosure can achieve multi-section stable and uniform feeding, the supplied glass melt 300 converges in the counter-roll gap 210, and the material pool height is small, thus being conducive to mitigating the risks of roll sticking, and further being capable of reducing the lateral thickness difference of the glass ribbon after rolling.

The above-mentioned are only for preferred embodiments of the present disclosure, and are not intended to limit the present disclosure, and various alterations and changes could be made to the present disclosure for those skilled in the art. Any modifications, equivalent substitutions, improvements and the like made within the spirit and principle of the present disclosure should be covered within the scope of protection of the present disclosure.

### INDUSTRIAL APPLICABILITY

The hopper mechanism provided by the present disclosure, by employing the thermally insulating section provided in the relief opening and the bare section extending out of the relief opening, is capable of effectively avoiding the risks of roll sticking during calendering processes and the fold mark defects upon completion of the calendaring, thereby ensuring the forming quality of the glass.

## Claims

1. A hopper mechanism, **characterized by** comprising a housing and a discharging hopper, wherein the discharging hopper is provided in the housing, the housing is provided with a relief opening at bottom, the discharging hopper is provided with a discharging nozzle, and the discharging nozzle comprises a thermally insulating section and a bare section connected to each other, wherein the thermally insulating section is provided in the relief opening, and the bare section extends out of the relief opening, with a height of the bare section ranging from 20 millimeters to 50 millimeters.

2. The hopper mechanism according to claim 1, wherein the discharging nozzle is provided in a flat shape; a sum of heights of the thermally insulating section and the bare section ranges from twice to four times an orifice width of the discharging nozzle, and/or an orifice length of the discharging nozzle ranges from twice to four times the orifice width of the discharging nozzle.

3. The hopper mechanism according to claim 2, wherein the orifice width of the discharging nozzle ranges from 12 millimeters to 20 millimeters; and the sum of the heights of the thermally insulating section and the bare section ranges from 24 millimeters to 80 millimeters, and/or the orifice length of the discharging nozzle ranges from 24 millimeters to 80 millimeters.

4. The hopper mechanism according to claim 2 or 3, wherein edges and corners of the orifice of the discharging nozzle are radiused.

5. The hopper mechanism according to any one of claims 2 to 4, wherein a plurality of discharging nozzles are provided, and the plurality of discharging nozzles are provided side by side and spaced apart on the discharging hopper.

6. The hopper mechanism according to claim 5, wherein a spacing between two adjacent discharging nozzles ranges from 45% to 55% of the orifice length of the discharging nozzles.

7. The hopper mechanism according to claim 6, wherein the spacing between two adjacent discharging nozzles ranges from 12 millimeters to 40 millimeters.

8. The hopper mechanism according to claim 5 or 6, wherein two adjacent discharging nozzles are provided with a reinforcing rib therebetween.

9. The hopper mechanism according to any one of claims 1 to 8, wherein the hopper mechanism further comprises a thermally insulating brick, wherein the thermally insulating brick is provided in the housing, and the thermally insulating brick is provided with an avoidance slot, wherein the avoidance slot communicates with the relief opening, the thermally insulating section is provided in the avoidance slot, and the thermally insulating brick is configured to thermally insulate the thermally insulating section.

10. The hopper mechanism according to any one of claims 1 to 9, wherein the hopper mechanism further comprises a thermally insulating layer provided between the housing and the discharging hopper.

11. A glass-article production device, **characterized by** comprising the hopper mechanism according to any one of claims 1 to 10.
